# EUROPEAN PATENT APPLICATION

(11) **EP 1 693 758 A1**
(43) Date of publication of application: **23.08.2006**
(21) Application number: 04819818.8
(22) Date of filing: 30.11.2004
(51) Int. Cl.: G06F 12/00

(54) **INFORMATION RECORDING MEDIUM DATA PROCESSING APPARATUS AND DATA RECORDING METHOD**

(30) Priority: 03.12.2003 JP 2003404158
(71) Applicant: MATSUSHITA ELECTRIC INDUSTRIAL CO., LTD., Osaka 571-8501 (JP)
(72) Inventor: SO, Hirokazu, c/o Matsushita El.Ind.Co.Ltd., Chuo-ku, Osaka-shi, Osaka 540-6319 (JP); MAEDA, Takuji, c/o Matsushita El.Ind.Co.Ltd., Chuo-ku, Osaka-shi, Osaka 540-6319 (JP); KUSAKA, Hiroya, c/o Matsushita El.Ind.Co.Ltd., Chuo-ku, Osaka-shi, Osaka 540-6319 (JP); TSUJITA, Shoichi, c/o Matsushita El.Ind.Co.Ltd., Chuo-ku, Osaka-shi, Osaka 540-6319 (JP); INOUE, Shinji, c/o Matsushita El.Ind.Co.Ltd., Chuo-ku, Osaka-shi, Osaka 540-6319 (JP)
(74) Representative: Eisenführ, Günther
(86) International application number: PCT/JP2004/017767
(87) International publication number: WO 2005/055064

(57) **Abstract**

The data processing apparatus (200) holds information about free area which enables writing at specific or more speed in a recording area of an information recording medium (100) including the recording area composed of plural blocks, in a valid free area manager (240). A free area which enables writing at specific or more speed is a block including more than a specified number of unused clusters. The data processing apparatus (200), when necessary to record data to a new free area in the information recording medium (100), refers to the information held in the valid free area manager (240), searches for a free area, and writes data into the searched area.

## Description

### Technical Field

The invention relates to a data processing apparatus and a data recording method for recording digital data in an information recording medium, and more particularly to a technology for assuring the minimum speed of writing process of digital data.

### Background Art

Recording media for recording music contents, movie contents, still image contents and other digital data (hereinafter called "data") are available in various types, including semiconductor recording medium, magnetic disk, optical disk, and magneto-optical disk. In particular, the semiconductor recording medium can be easily reduced in size and weight, and is rapidly spreading in wide applications such as digital still camera, portable telephone terminal, and other portable appliances. Representative examples of semiconductor recording medium include SDMemory Card (registered trademark) , Memory Stick (registered trademark), and Compact Flash (registeredtrademark).

The semiconductor recording medium is yearly increased in capacity, and by making use of the merit of large capacity, it is expected to be applied in the field of movie contents recording. In the case of real-time recording of movie contents by a portable movie terminal or the like, it is important to assure the minimum speed of writing process in order to prevent stop of recording due to lack of writing speed into recording medium.

Management of data to be stored in the semiconductor recording medium is realized by a file system. In the file system, the recording area is divided into minimum access units, such as sectors, or clusters as sets of sectors, and one or more clusters are managed as files. The file system generally used in PC (personal computer) and other information appliances is, for example, FAT (file allocation table) file system (see, for example, nonpatent document 1 for detail).

On the other hand, inside the semiconductor recording medium, the recording area is managed in the unit of blocks. Accordingly, if the writing sizes are the same, data is written continuously in a same block, so that the process is executed at high speed. The block size is generally larger than the cluster size.

Hitherto, it has been proposed to increase the writing speed into the semiconductor recording medium by matching the cluster boundary with the block boundary (see, for example, patent document 1). According to this method, an integer number of clusters are present in one block. Therefore, at the time of writing process of one cluster, updating process is not needed in two or more blocks.

[Patent document 1] JP-A-2001-188701

[Nonpatent document 1] ISO/IEC9293, Information Technology - Volume and file structure of disk cartridges for information, 1994

### Disclosure of Invention

The prior art, however, has the following problems. In the conventional control method, if writing and erasing of various file sizes are repeated in the semiconductor recording medium, the free area is fragmented. That is, free cluster positions are discrete. When data is recorded in the semiconductor recording medium in such discrete state, if the number of free clusters is small in each block, writing process over plural blocks is executed frequently, and the processing speed may be extremely lowered as compared with the case of continuous writing in same block. As a result, the minimumwriting speed necessary for real-time recording of movie contents cannot be assured, and the recording process breaks down.

The invention is conceived in the light of the above problems, and it is hence an object thereof to present a data recording apparatus and a recording method capable of reducing the drop of writing process speed in the information recording medium.
(1) A first data recording method of the invention is a recording method of recording data to an information recording medium. The information recording medium has a recording area for storing data and stored data which is managed by a file system. The recording area of the information recording medium is managed in block units, and each block includes a specified number of clusters as units for storing data for the file system. The data recording method includes, when necessary to record data in a new free area, searching for a block which has a specified threshold number or more of unused clusters, and writing the data in the searched block prior to the other block.
   The data may be written in unused clusters in a valid block which is a block including a specified number or more of unused clusters.
   The recording method may further include counting the unused clusters contained in each block in the recording area, determining the valid block on the basis of the counting result, generating and holding a valid free area list which is list information related to the valid block, and searching for the valid block by referring to the valid free area list at data recording process.
   Information about the threshold may be stored in the information recording medium. The threshold may be a value of 1/2 or more of the number of clusters included in one block.
(2) A first data processing apparatus of the invention is a data processing apparatus for writing or reading data to or from an information recording medium. A recording area of the information recording medium is managed in block units, and each block includes a specified number of clusters, the cluster being unit for storing data for a file system. The first data processing apparatus includes an I/O processing section that processes input and output of information for the information recordingmedium, a file system controller thatmanages data stored in the information recording medium, as a file, a data processor that controls writing and reading of data to and from the information recording medium, and a valid free area manager that holds information for a block containing a specified threshold number or more of unused clusters in an area of the information recording medium. When necessary to record data to a new free area, the data processor, as a control, searches for a block containing a specified threshold number or more of unused clusters with reference to the information held in the valid free area manager, and writes data to the searched block prior to the other block.
(3) A data re-arrangement method of the invention is a data re-arrangement method in a recording area of an information recording medium having a recording area for storing data and stored data which is managed by a file system. The recording area of the information recording medium is managed in block units, and each block includes a specified number of clusters as unit for storing data for file system. The method includes judging whether the number of unused clusters contained in the block is within a specified range, for each block of the information recording medium, and moving data to unused clusters contained in the block having the number of unused clusters which is within the specified range, from used clusters in other block.
   The specified range is, for example, 1 or more and less than 1/2 of the number of clusters included in one block, or 1 or more and less than the threshold number of (1).
   When stored data in the information recording medium is managed by FAT file system and the FAT file system has first and second FAT tables as link information, a valid FAT flag showing which one of the first and second FAT tables is valid is provided. After moving the data, the second FAT table is written into the information recording medium, the valid FAT flag is set to show that the second FAT table is valid. Then the content of the second FAT table is copied into the first FAT table in the information recording medium, and the valid FAT flag is set to show that the first FAT table is valid.
(4) A second data processing apparatus of the invention is a data processing apparatus for writing or reading data to or from an information recording medium. The second processing apparatus includes an I/O processing section that processes input and output of information for the information recording medium, a file system controller that manages the data stored in the information recording medium, as a file, a data processor that controls writing and reading of data to and from the information recording medium, and a block judging section that classifies each block in the information recording medium according to the number of unused clusters contained in each block and holds information about the classification. As a control, the data processor, with reference to the classification information held in the block judging section, judges for each block whether the number of unused clusters contained in a block is within a specified range or not, and when the block has unused clusters within the specified range, moves data to unused clusters contained in the block from used clusters of other block.

### Effect of the Invention

According to the invention, when writing into the semiconductor recording medium having fragmented free areas, extreme drop of speed can be avoided. Therefore, minimum writing speed necessary for real-time recording of movie contents can be assured, which brings about outstanding effects.

### Brief Description of Drawings

FIG. 1 is a block diagram of semiconductor recording medium and data processing apparatus in embodiment 1 of the invention.
FIG. 2 is a diagram of example of data of valid free area list.
FIG. 3 is a diagram of FAT file system.
FIG. 4 is a diagram of example of data storage of FAT file system.
FIG. 5 is a flowchart of example of data writing process of FAT file system.
FIG. 6 is a flowchart of example of generating process of valid free area list.
FIG. 7 is an explanatory diagram of setting method of valid flag of entry of valid free area list.
FIG. 8 is a flowchart of example of data writing process of FAT file system by using valid free area list.
FIG. 9 is a diagram showing an example of state before and after file data writing process.
FIG. 10 is a block diagram of semiconductor recording medium and data processing apparatus in embodiment 2 of the invention.
FIG. 11 is a conceptual diagram of example of block judging section.
FIG. 12 is a flowchart of example of data re-arrangement process.
FIG. 13 is a flowchart of example of datamovingprocess into free cluster Z.
FIG. 14 shows an example of change of state before and after data moving process into free cluster Z (when link destination cluster is behind free cluster Z).
FIG. 15 shows an example of change of state before and after data moving process into free cluster Z (when link destination cluster is ahead of free cluster Z).
FIG. 16A is a flowchart of modified example of data re-arrangement process.
FIG. 16B is a flowchart of FAT writing process in modified example of data re-arrangement process.

### <Reference Signs>

- 100: Semiconductor recording medium
- 110: Host interface
- 120: Controller
- 130: Data storage section
- 131: Management information area
- 132: Data area
- 200, 200b: Data processing apparatus
- 210: Slot
- 220: I/O processing section
- 230: File system controller
- 240: Valid free area manager
- 241: Valid free area list
- 242: Selection flag
- 250: Data processor
- 301: Directory entry
- 302: FAT table
- 260: Block judging section

### Best Mode for Carrying Out the Invention

Referring now to the accompanying drawings, exemplary embodiments of the invention are described specifically below.

### Embodiment 1

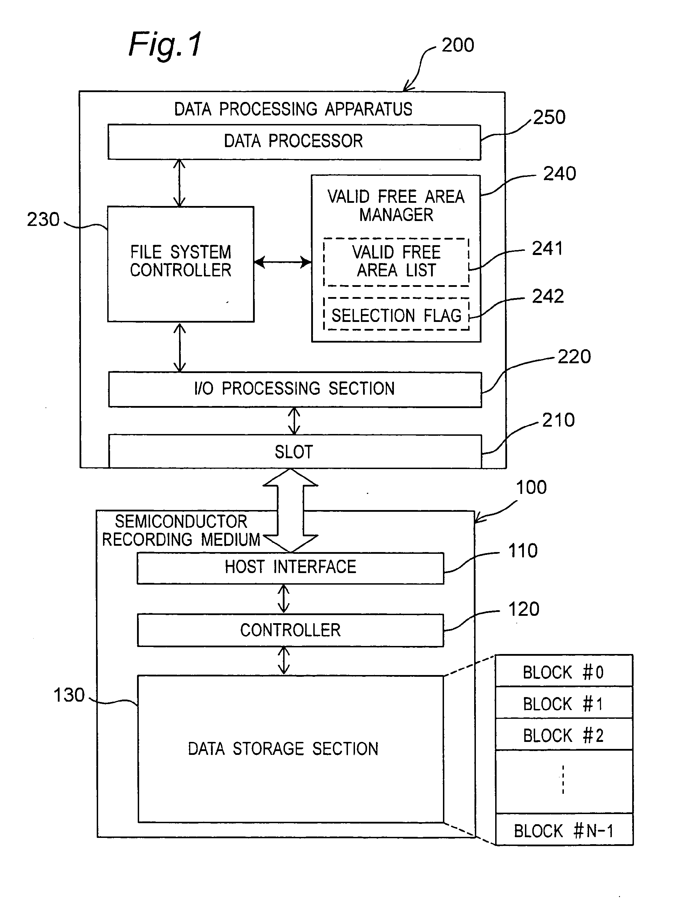

Fig. 1 is a block diagram of semiconductor recording medium and data processing apparatus in embodiment 1 of the invention.

A semiconductor recording medium 100 includes a host interface 110, a controller 120, and a data storage section 130.

The host interface 110 exchanges information with a data processing apparatus 200 which is a host device of the semiconductor recording medium 100.

The controller 120 controls the inside of the semiconductor recording medium 100. The controller 120 processes the command received in the host interface 110, and sends the processing result, as required, to the data processing apparatus 200 by way of the host interface 110. It also manages the data to be stored in the data storage section 130.

The data storage section 130 has an area for recording data capable of reading and writing arbitrary data from the data processing apparatus 200, and is composed of nonvolatile memory such as flash memory. The recording area of data storage section 130 is managed in units called blocks by the controller 120. In the embodiment, the size of one block is 256 kilobytes (kB), and the recording area of data storage section 130 has N blocks from block #0 to block #(N-1). In the data storage section 130, a FAT file system is constructed.

The data processing apparatus 200 includes a slot 210, an I/O processing section 220, a file system controller 230, a valid free area manager 240, and a data processor 250.

The slot 210 is hardware for loading the semiconductor recording medium 100.

The I/O processing section 220 exchanges information such as command and data with the semiconductor recording medium 100 loaded in the slot 210.

The file system controller 230 interprets and controls the FAT file system constructed on the data storage section 130. The file system controller 230 presents means for accessing data as file to the data processor 250. The file system controller 230 also accesses data in the data storage section 130 by way of the I/O processing section 220. The file system controller 230 has a RAM (not shown) in its inside, and stores the FAT information stored in the semiconductor recording medium 100 in the RAM.

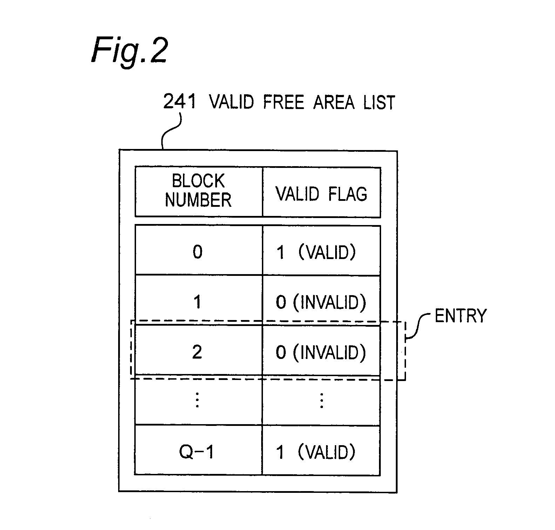

The valid free area manager 240 manages the free area in the data storage section 130 managed by the file system controller 230, whether valid or invalid in the block unit. The "valid" means that data writing can be processed at more than a specific speed in an area (block) . The specific speed is, for example, the minimum writing speed required for real-time recording of movie content. The block managed by the valid free area manager 240 is a region on a logical address space, and is set corresponding to a block in a physical address space in the data storage section 130 of semiconductor recording medium 100. The valid free area manager 240 generates and manages a valid free area list 241 which is a list showing valid free areas. An example of valid free area list 241 is shown in FIG. 2. FIG. 2 shows that blocks having block numbers 0 and Q-1 are valid free areas, that is, valid blocks. The valid free area manager 240 also has a selection flag 242. The selection flag 242 is a flag showing whether one of plural entries included in the valid free area list 241 is being selected or not in a data writing process.

The data processor 250 executes central processing of the data processing apparatus 200, and processes data stored or data to be stored in the semiconductor recording medium 100. For example, the data processor 250 controls writing and reading of data in the semiconductor recording medium 100.

The FAT file system to be constructed in the data storage section 130 is explained below.

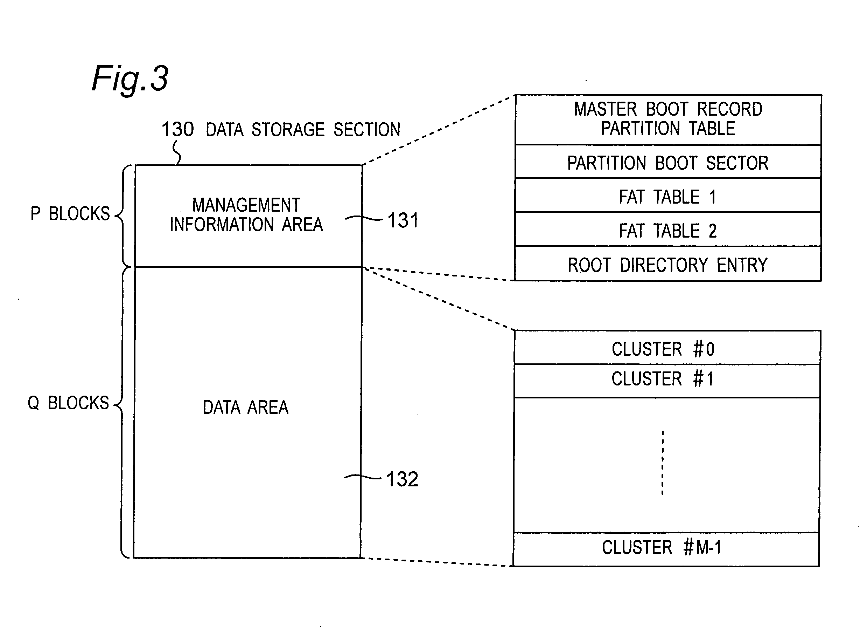

FIG. 3 shows data structure of FAT file system constructed in the data storage section 130. Of N blocks (N being a natural number of 2 or more) composing the data storage section 130, P blocks (P<=N) are utilized as management information area 131 for storing the information for managing the entire file system, and the remaining Q blocks (Q=N-P) are utilized as data area 132 for storing entity data of file and others.

The management information area 131 has a master boot record partition table for storing information for managing the data storage section 130 by dividing into plural regions called partitions, a partition boot sector for storing management information in one partition, FAT table 1 and FAT table 2 for indicating physical storage positions of data contained in the file, and a root directory entry for storing information of file and directory existing immediately below the root directory. Two FAT tables are used in order to assure double security because important information is stored in the FAT table.

The data area 132 is divided into plural logical data units called clusters and is managed. Each cluster stores data contained in file. A file storing data of large size makes use of plural clusters, and clusters are linked by the link information stored in FAT table 1 and FAT table 2. In this embodiment, the cluster size is 16 kB. Accordingly, one block includes 16 clusters. The data area 132 has M clusters, cluster #0 to cluster # (M-1).

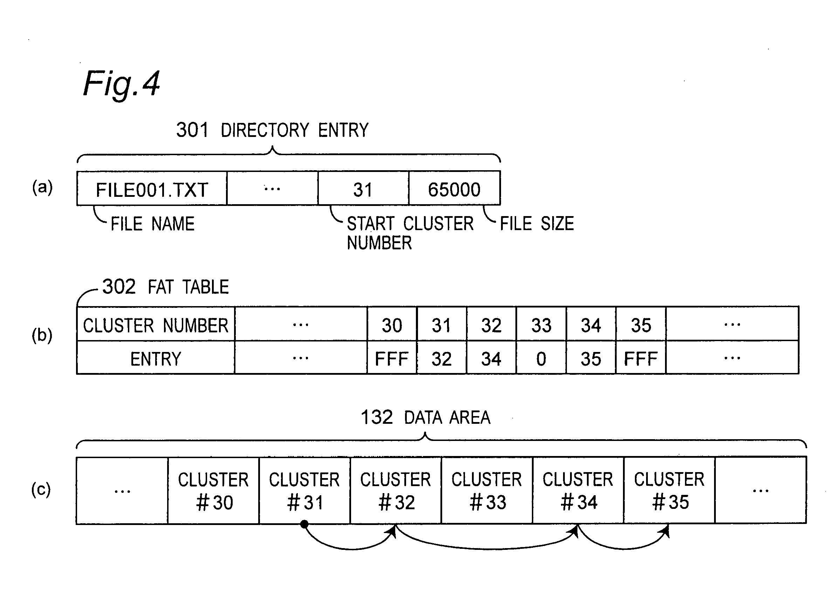

Referring now to FIG. 4, a specific example of storing file data in the FAT file system is described below.

In part of root directory entry or data area 132, a directory entry 301 for storing file name or file size is stored as shown in FIG. 4(a). The data area 132 which is destination of storing file data is managed in cluster unit, and each cluster is identified with a unique cluster number. To specify the cluster in which file data is stored, the directory entry 301 stores the cluster number (start cluster number) of the cluster storing the beginning portion of file data. The example of directory entry 301 in FIG. 4(a) shows that the data of file having the name of "FILE001.TXT" is stored in clusters starting from cluster number 31.

In the case of a file of which data is stored in plural clusters, the link information is stored in the FAT table. An example of FAT table 302 is shown in FIG. 4 (b). FAT entries showing link information of each cluster are stored in the FAT table 302. A FAT entry stores the cluster number of a cluster to be linked next. In the example in FIG. 4(b), "32" is stored as FAT entry corresponding to cluster number 31. It means that the cluster of cluster number 31 is linked to the cluster of cluster number 32. Similarly, "34" is stored in the FAT entry corresponding to cluster number 32, and "35" is stored in the FAT entry corresponding to cluster number 34, and the clusters are linked in the sequence of cluster numbers 31, 32, 34, and 35. In the FAT entry corresponding to cluster number 35, "FFF" is stored, and "FFF" means the end of link, and hence the links starting from cluster number 31 are terminated in four clusters in cluster numbers 31, 32, 34, and 35. Therefore, the data in the file name of "FILE001.TXT" are stored in the sequence of clusters #31, #32, #34, and #35 as shown in Fig. 4(c) in data area 132. In the FAT entry corresponding to cluster number 33, "0" is stored, which means that this cluster is not assigned for the file, and this is a free area, and is not used.

An example of writing process of file data in FAT file system is explained.

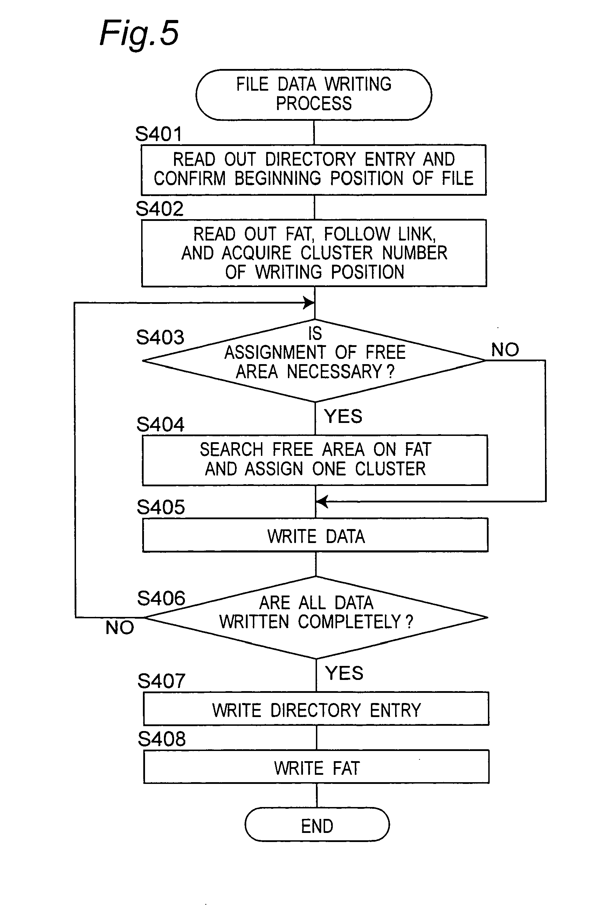

FIG. 5 is a flowchart showing procedure of file data writing process in FAT file system. In file data writing process, first of all, the directory entry 301 of object file for writing is read out on the RAM of the file system controller 230, and the start cluster number stored in the directory entry 301 is acquired, and the beginning position of data of object file is confirmed (S401). Further, FAT table 1 and FAT table 2 are read out on the RAM of the file system controller 230, and a link is followed sequentially from the data beginning position of object file obtained at step S401 by referring to FAT table 1 or FAT table 2 being read out on the RAM, and cluster numbers corresponding to writing positions are acquired (S402).

When writing data, it is judged if necessary or not to assign a free area newly for the object file (S403). If not necessary to assign a free area, the process goes to step S405. If necessary to assign a free area, a free area (free cluster) is searched on FAT table 1 or FAT table 2, and a free area for one cluster is assigned at the terminal end of the object file (S404).

Data are written as much as possible in the cluster being referred to at the present (S405). At this time, the FAT tables 1 and 2 being read out on the RAM of the file system controller 230 are updated as a result of data writing process.

It is then judged whether all data are written completely or not (S406). If data are still remaining, going back to step S403, steps S403 to S406 are repeated in next clusters, and data are written into data area 132. When all data of object file are written completely, the file size and time stamp stored in the directory entry 301 being read out on the RAM of the file system controller 230 are updated, and the updated directory entry is written into the semiconductor recording medium 100 (S407).

Finally, FAT table 1 and FAT table 2 updated on the RAM of the file system controller 230 are written back into the semiconductor recording medium 100, and the process is terminated (S408).

By repeating writing and erasing of files of different sizes, the link information of the FAT entry is complicated more and more. That is, individual file data are stored in discrete state in the data area 132. Similarly, unused free areas are also stored in discrete positions. This phenomenon is called "fragmentation of data." When data are recorded in such fragmented recording area, the access time to such area is very long. In the embodiment, it is designed not to record data in such fragmented area. Such data recording method is specifically described below.

Prior to explanation of data recording method, first, a generating procedure of valid free area list 241 is described.

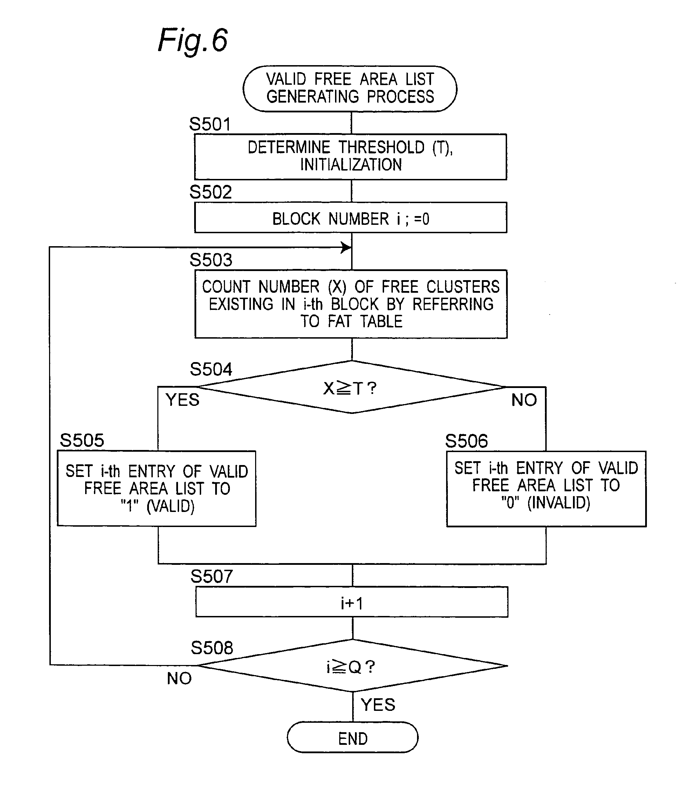

FIG. 6 is a sequence example of procedure for generating a valid free area list 241 by the valid free area manager 240 of the data processing apparatus 200.

In the generating process of valid free area list, first of all, threshold T is set to determine how many free clusters are needed in the block for the valid free area manager 240 to permit writing (S501). In this embodiment, the threshold T is a predetermined value (fixed value). Preferably, the threshold T is set at equal to or more than 1/2 of the number of clusters contained in one block. At the same time, other values than setting of the threshold T are initialized (S501). For example, the valid flags of all entries in the valid free area list 241 are set to "0" (invalid).

The following process is executed, supposing block number i (i being a variable) from the beginning of data area 132 to be 0 (S502).

The valid free area manager 240 receives the information of FAT tables 1 and 2 from the file system controller 230, and counts the number X of free clusters existing in the i-th block (S503). It is judged if the number X of free clusters is equal to or more than the threshold T or not (S504).

When the number X of free clusters is the threshold T or more (if Yes) , the valid flag of i-th entry of the valid free area list 241 shown in FIG. 2 is set to "1" (valid) (S505).

When the number X of free clusters is less than the threshold T (if No), the valid flag of i-th entry of the valid free area list 241 is set to "0" (invalid) (S506).

Then, adding 1 to block number i (S507) , it is judged if block number i is equal to or more than the total number of blocks Q of data area 132 or not (S508). If i is less than Q, going back to S503, the process of S503 to S507 is repeated. When block number i is Q or more at step S508, the process is terminated.

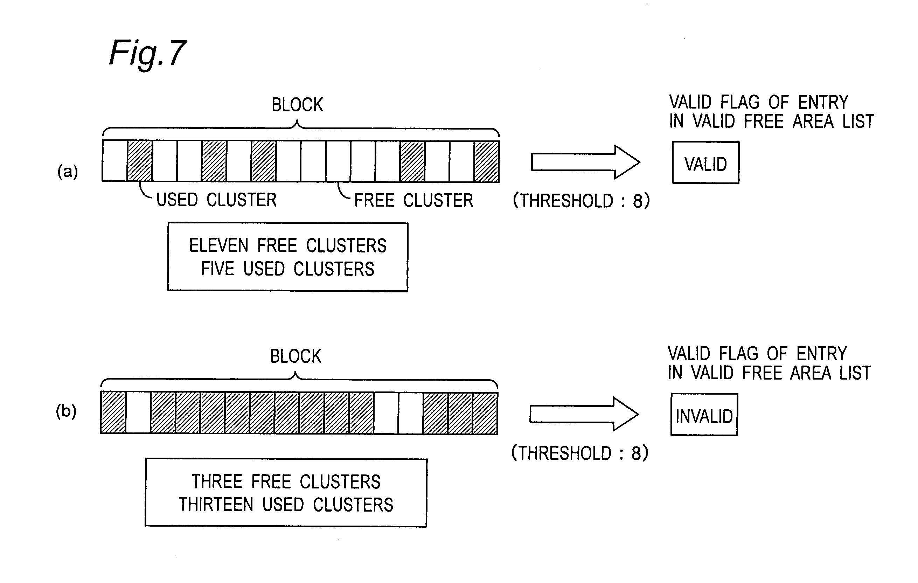

FIG. 7 explains the setting method of valid flag of entry of valid free area list 241 when the threshold T is "8". In the diagram, the clusters being used are shown by hatching. In the example in FIG. 7 (a), the block has 11 free clusters, and the threshold T is 8 or more, and hence "1" (valid) is set as valid flag of entry. In the example in FIG. 7(b), the block has three free clusters, and the number of free clusters is less than 8, and hence "0" (invalid) is set as valid flag of entry.

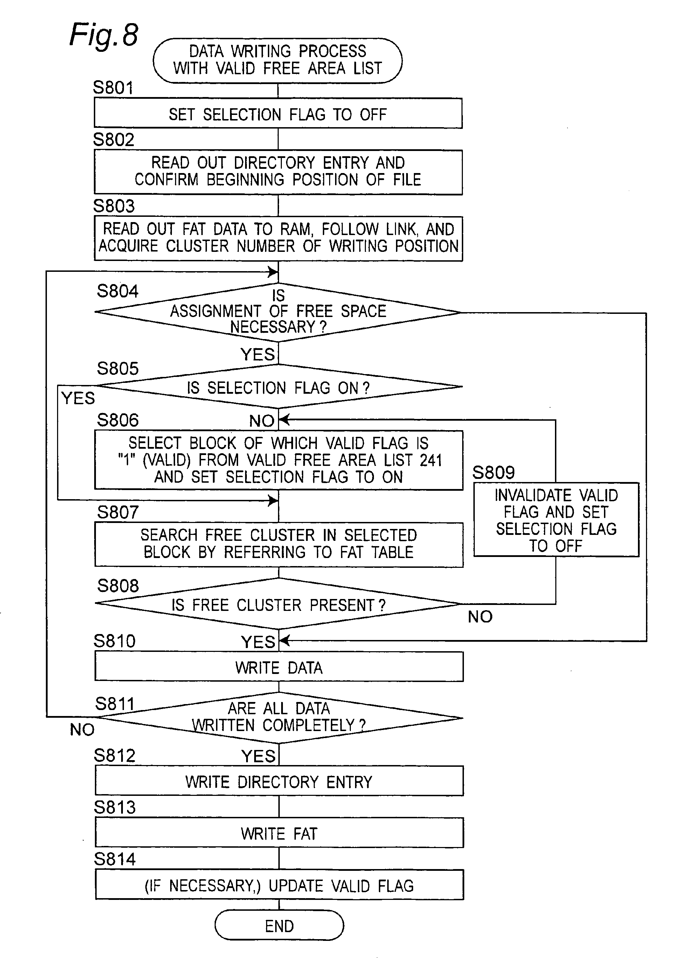

Procedure of file data writing process in the embodiment is explained. FIG. 8 shows the file data writing process in the embodiment.

In the file data writing process, first, the selection flag 242 is set to OFF (S801). A directory entry 301 of object file of writing is read out to the RAM of file system controller 230, and the file start cluster number stored in the directory entry 301 is acquired, and the beginning position of file data is confirmed (S802).

Reading out FAT table 1 and FAT table 2 to the RAM of file system controller 230, a link is followed sequentially from the beginning position of file data acquired at step S802 by referring to FAT table 1 or FAT table 2 which has been read out to the RAM, and the cluster number of writing position is acquired (S803).

When writing data, it is judged if necessary or not to assign a free area newly for the object file (S804). If not necessary to assign a free area (if No), the process goes to step S810.

If necessary to assign a free area (if Yes at step S804), it is judged if the selection flag 242 is ON or not (S805). If the section flag 242 is OFF, referring to the valid free area list 241, one block of which valid flag is "1" (valid) is selected, and the selection flag 242 is set to ON at the same time (S806). That is, when the selection flag 241 is ON, a block of which valid flag is "1" (valid) has already been selected as writing area, but when the selection flag 241 is OFF, a block of which valid flag is "1" (valid) is not selected yet, and it is necessary to select newly a block of which valid flag is "1" (valid) by referring to the valid free area list 241. If block of which valid flag is "1" (valid) is not present at all in the valid free area list 241, one block is selected from the blocks of which valid flag is "0" (invalid). Thus, a block is selected by priority from blocks of which valid flag is "1" (valid).

Referring to FAT table 1 or FAT table 2 on the RAM, free cluster is searched in the selected block (S807). It is judged if free cluster is present or not (S808).

If free cluster is not present (if No at S808), the valid flag of the block being selected at the present is invalidated in the valid free area list 241 (S809). That is, the valid flag of corresponding entry is updated to "0" (invalid). Further, the selection flag 242 is set to OFF (S809), and the process returns to step S806.

If free cluster is present (if Yes at S808), data are written as much as possible in the free cluster being referred to at the present (S810).

It is then judged whether all data are written completely or not (S811). If data are still remaining, going back to step S804, steps S804 to S810 are repeated until all data are written completely.

When all data are written completely, the file size and time stamp stored in the directory entry 301 on the RAM of the file system controller 230 are updated, and the updated directory entry is written into the semiconductor recording medium 100 (S812). FAT table 1 and FAT table 2 on the RAM of file system controller 230 are written back into the semiconductor recording medium 100 (S813).

Finally, confirming the number of free clusters in the block being selected at the present, if less than the threshold T, the valid flag of corresponding entry in the valid free area list 241 is updated to "0" (invalid) , and the process is terminated (S814).

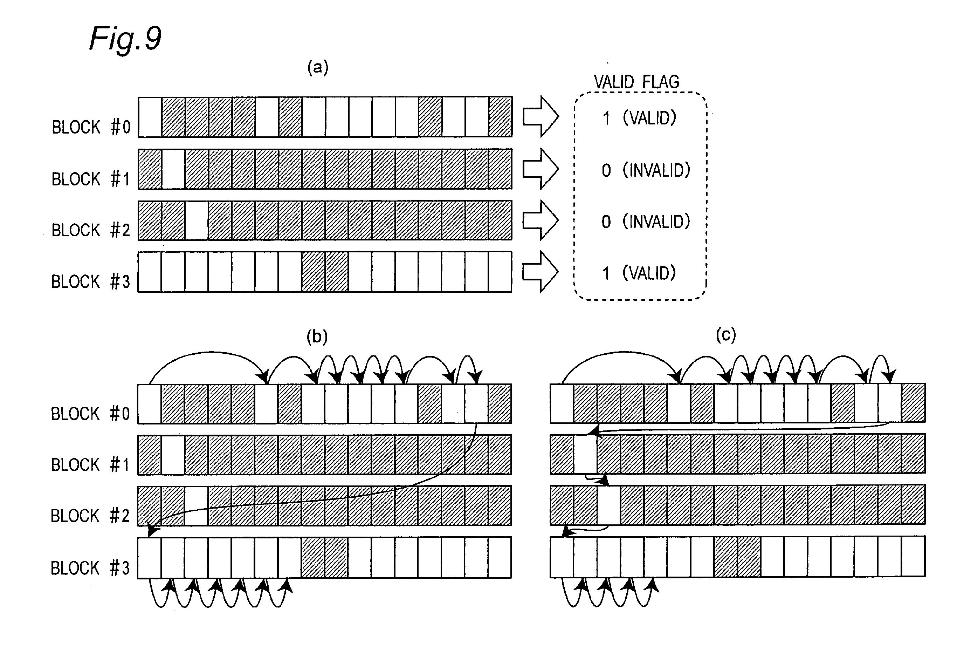

Referring now to FIG. 9, selection of free cluster by the file data writing process is specifically described. The state of data area 132 before the file data writing process is shown in FIG. 9(a). The threshold T is 8, and in the valid free area list 241, block #0 and block #3 are "valid", and block #1 and block #2 are "invalid".

FIG. 9(b) shows an example of writing of data of 16 clusters by the file data writing process. Data writing starts from block #0, and when data are recorded in all free clusters in block #0, data are successively recorded in block #3. Since the valid flags of block #1 and block #2 are set "invalid", data are not written into these blocks. In this case, block transition is only once, from block #0 to block #3.

FIG. 9 (c) shows an example of writing of data of 16 clusters by conventional file data writing process. In the conventional method, free clusters are searched from the beginning of FAT table 1 and FAT table 2, and writing to block #1 and block #2 also occurs. As a result, block transition occurs three times, from block #0 to block #1, from block #1 to block #2, and from block #2 to block #3. As compared with the case of FIG. 9(b), the number of transitions among blocks increases, and hence the processing speed of data recording is lowered.

In the embodiment, before the data processing apparatus 200 writes data into the semiconductor recording medium 100, the number of free clusters in the semiconductor recording medium 100 is checked, and data are written only into blocks having equal to or more than a specified number of free clusters, and hence the number of times of block transitions as cause of extreme lowering of writing speed can be decreased.

Therefore, in the semiconductor recording medium 100 having fragmented free areas, the minimum writing speed necessary for real-time recording of movie contents can be assured.

The following modified examples can be conceived.
(1) In the embodiment, in the process at step S501 in FIG. 6, the threshold T is preliminarily determined as fixed value, but information about threshold T may be stored in the semiconductor recording medium 100, and the data processing apparatus 200 may refer to the information and determine the threshold T. It may also be determined by the information specified by the user.
(2) In the embodiment, the FAT file system is explained, but it is not limited. The concept of the invention can be applied where file data is managed in a smaller unit than the access unit.
   The block unit and cluster unit are mere examples, and other sizes are also applicable.
(3) In the embodiment, in the explanation of procedure of file data writing process, error processing is omitted, but error processing may also be added. For example, in the process at step S806 shown in FIG. 8, if block of valid flag "1" (valid) is not present in the valid free area list 241, writing process may be interrupted as error processing.
(4) In the embodiment, before file data writing process, valid free area list 241 is created in advance, but valid free area list 241 and selection flag 242 are not always necessary. When searching for free area to be used by referring to FAT table, by judging if the number of free clusters in the block belonging to the free cluster desired to be assigned is equal to or more than the threshold T or not, and only when equal to or more than the threshold T, the free cluster of this block may be used.
   In the embodiment, valid free area list 241 is created for all blocks of data area 132, but it takes much time in creating valid free area list 241 or enough memory is not available, the valid free area list 241 may be created in part of blocks, and generated again if necessary.
   In the embodiment, it is supposed that selection flag 242 is present in the valid free area controller 240, but may also be present in the file system controller 230.
(5) The data recording method of the embodiment is valid when the block to be managed in the recording medium is larger than the cluster of file data unit in the file system, and the access speed is lowered when recorded over plural blocks. As far as the recording medium satisfies such condition, it is not limited to semiconductor recording medium 100, but the concept of the invention may be applied to other information recording media.

### Embodiment 2

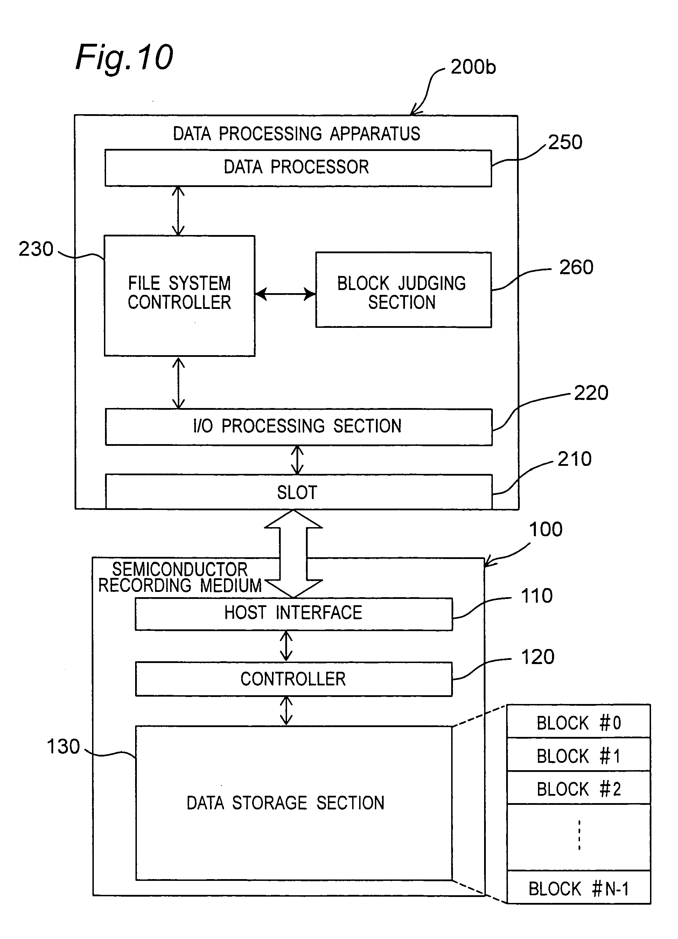

Fig. 10 is a block diagram of semiconductor recording medium and data processing apparatus in embodiment 2 of the invention. In this embodiment, stored data in the semiconductor recordingmedium is re-arranged in order to solve the fragmentation problem of recording area of semiconductor recording medium.

A data processing apparatus 200b of the embodiment is basically constructed same as in embodiment 1, except that a block judging section 260 is provided as re-arrangement section of stored data in semiconductor recording medium, instead of the valid free area manager 240.

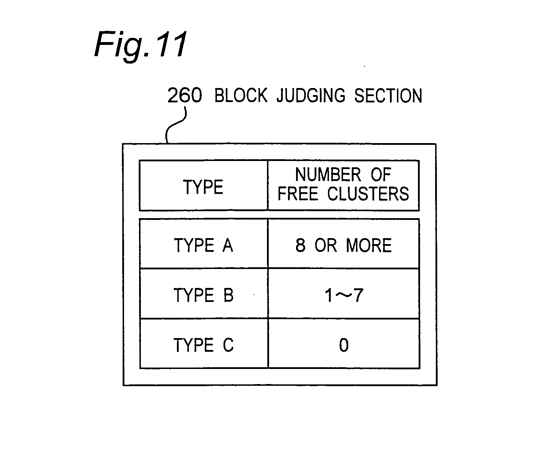

The block judging section 260 judges the "type" of each block in the data storage section 130 of semiconductor recording medium 100. FIG. 11 shows an internal structure of block judging section 260. In this embodiment, the block type is determined by the number of free clusters existing in the block, and type A, type B and type C are defined. In this embodiment, same as in embodiment 1, the size of one block is 256 kB, and one block has 16 clusters of 16 kB each. If eight or more free clusters are present in one block, that is, one block having half or more free clusters is "type A". One block having one to seven free clusters is "type B", and one block having no free cluster is "type C".

If there are many type B blocks having few free clusters, if attempted to record data of large capacity such as movie continuously, writing over plural blocks occurs frequently, and the writing process speed may be lowered extremely.

In the embodiment, accordingly, type B blocks are searched, and data are moved into such blocks from other blocks, that is, data are re-arranged, and type B blocks are transformed into type C as much as possible. As a result, data can be concentrated in type B blocks having few free area, and free area in other blocks is expanded, fragmentation is suppressed.

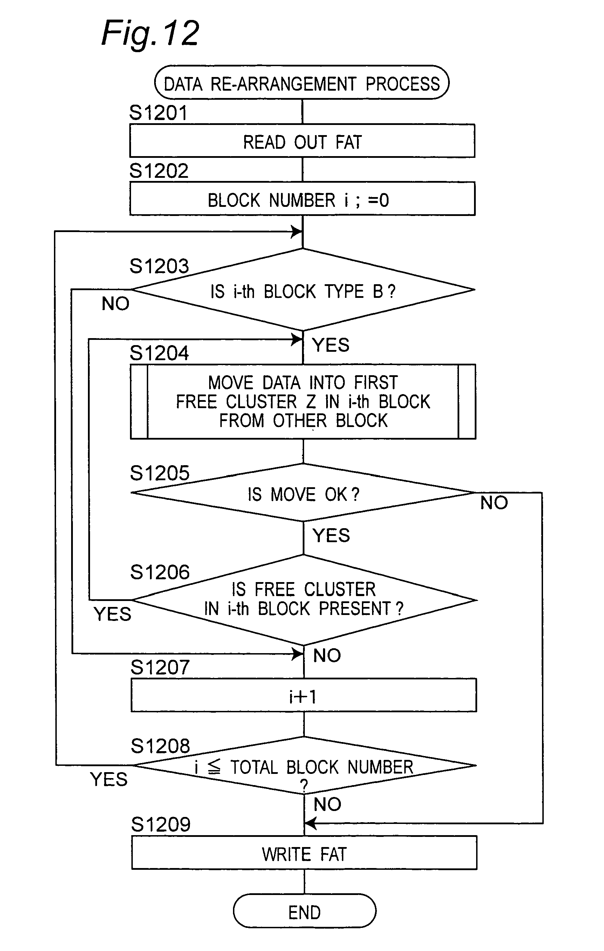

Detail of data re-arrangementmethodof the embodiment is explained. FIG. 12 is a flowchart of instruction of data re-arrangement of semiconductor recording medium 100 from the data processor 250 of data processing apparatus 200b to file system controller 230. The data re-arrangement method of the embodiment is intended to decrease the number of type B blocks, that is, blocks having one to seven free clusters out of 16 clusters as mentioned above as much as possible.

The file system controller 230 reads out FAT table 1 and FAT table 2 on the RAM firstly (S1201). Next, variable i showing the block number from the beginning of data area 132, is set to 0 (S1202), and the following process is executed.

The block judging section 260 counts the number of free clusters existing in i-th block on the basis of information from the file system controller 230, and judges the type of i-th block (S1203).

As a result of judging at step S1203, if it is not type B, going to step S1207, block number i is incremented. If the case of type B, data are moved into first free cluster in the i-th block from other block (S1204). Detail of this process is described below. In the following explanation, free cluster as destination of move of data from other block is called "free cluster Z" .

It is then judged if the moving process is complete or not (S1205). If not complete, that is, if there are no longer data to be moved, on the basis of data in FAT table 1 and FAT table 2 on the RAM of the file system controller 230, FAT table 1 and FAT table 2 of semiconductor recording medium 100 are updated (S1209), and the process is terminated.

When the moving process at step S1204 is complete, remaining free clusters in i-th block are searched (S1206). If a free cluster is left over in i-th block, this free cluster is set as free cluster Z of data move destination, and the process returns to step S1204. If not left over, block number i is incremented (S1207), and it is judged if i is equal to or less than the total block number Q of data area 132 or not (S1208).

If i is equal to or less than Q, back to step S1203, the process at steps 1203 to S1207 is continued. If i is more than Q, on the basis of data in FAT table 1 and FAT table 2 on the RAM of the file system controller 230, FAT table 1 and FAT table 2 of semiconductor recording medium 100 are updated (S1209), and the process is terminated.

Thus, in the re-arrangement process of the embodiment, free clusters are detected sequentially from the beginning block of data area 132, and data are re-arranged by moving data into the free cluster from other block, and when there are no more data to be moved or when the final block is processed, the re-arrangement process is completed.

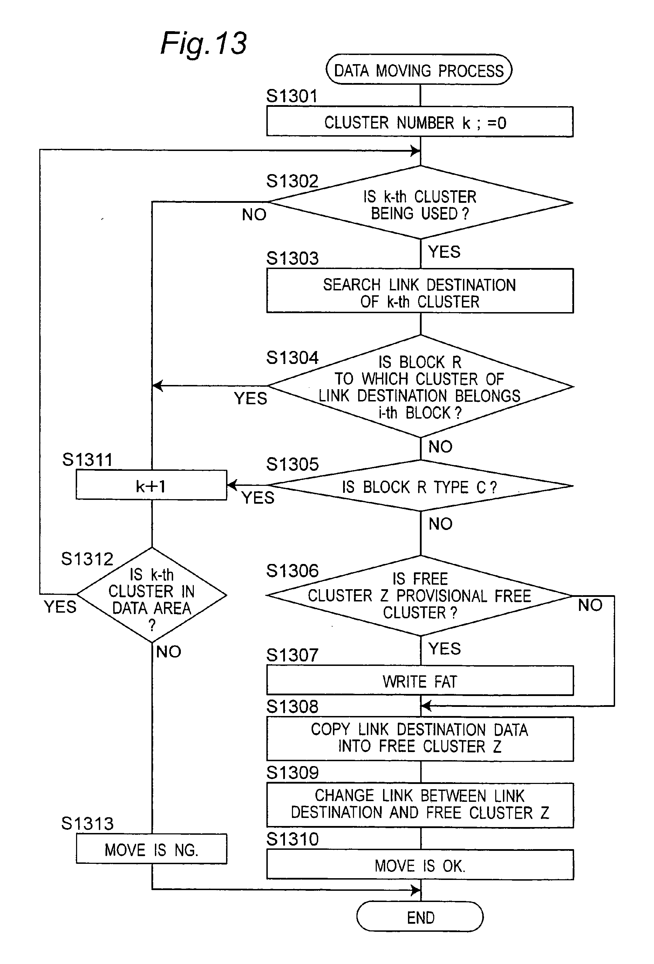

The data moving process at step S1204 is more specifically described below by referring to FIG. 13. FIG. 13 is a flowchart of process of moving data into free cluster Z in i-th block from other block.

In this moving process, when moving the data into free cluster-Z, the cluster as data move destination is searched by using FAT table 1 or FAT table 2. This moving process is realized by link information changing process to be stored in FAT table 1 or FAT table 2 on the semiconductor recording medium 100, and data copying process into data area 132. In data moving process, data at the beginning of link are not moved, and hence search or rewriting of directory entry does not occur, and high speed processing is realized.

Referring to FIG. 13, inthismovingprocess, variable k for specifying the cluster number from the beginning of data area 132 is firstly set to 0 (S1301). That is, in each cluster of data area 132, the following process is executed sequentially from the beginning of data area. Referring then to FAT table 1 or FAT table 2, it is judged if k-th cluster is being used or not (S1302).

If k-th cluster is not being used, k is incremented (S1311). It is judged if k-th cluster after increment is within the range of data area 132 or not (S1312). If within the range, the process returns to step S1302. If out of the range, there is no longer cluster available for moving data in that block, and move is NG (not complete) (S1313), and the process is terminated.

At step S1302, if the k-th cluster is being used, link destination of k-th cluster is searched from the FAT entry (S1303). The block to which the cluster of link destination belongs (block R) is judged to be i-th block or not (S1304).

If the block to which the cluster of link destination belongs is i-th block, the move is within the same block, and it is meaningless, and nothing is processed in this cluster, and the process goes to step S1311. The process after step S1311 is as mentioned above.

If block R to which the cluster of link destination belongs is not i-th block (if No at S1304), it is judged if block R is type C or not (S1305). If block R is type C, move of data from this block R causes fragmentation, which is not appropriate. Hence, if block R to which the cluster of link destination belongs is type C, advancing to step S1311, the next cluster is investigated.

On the other hand, if block R is not type C, before moving data, free cluster Z of data move destination is judged to be "provisional free cluster" or not (S1306). Detail of provisional free cluster is given below.

If the free cluster Z is a provisional free cluster (if Yes at S1306), since data of cluster Z are to be overwritten, FAT table 1 and FAT table 2 on the RAM of system controller 230 are written back into the semiconductor recording medium 100 beforehand (S1307). That is, before writing data, FAT table 1 and FAT table 2 on the semiconductor recording medium 100 are updated.

Next, the link destination data of cluster number k is copied into free cluster Z (S1308). That is, data are written into data area 132.

Afterwards, in the RAM of file system controller 230, cluster number k, and link information between link destination of cluster number k and free cluster Z are rewritten (S1309), and the move is OK (complete) (S1310), and the process is terminated.

The provisional free cluster is explained. The provisional free cluster is a cluster which is recognized to be free (not used) on the FAT table of data processing apparatus 200b after data move between clusters, but is not recognized to be free on the FAT table of semiconductor recording medium 100. For example, when data are moved from cluster X to cluster Y, cluster X is recognized to be free (not used) on the FAT table of data processing apparatus 200b, but may not always be recognized to be free on the FAT table of semiconductor recording medium 100. This is because the updating timing is different between the FAT table of data processing apparatus 200b and the FAT table of semiconductor recording medium 100.

From the viewpoint of processing efficiency, the data processing apparatus 200b takes the FAT table of semiconductor recording medium 100 into the inside of the data processing apparatus 200b, usually updates its inside FAT information only, and rewrites the FAT table of semiconductor recording medium 100 only at a specific timing. This is intended to shorten the processing time of data updating because it takes time in updating process of FAT table of semiconductor recording medium 100. When moving data from cluster X to cluster Y, the data in cluster X at move origin is copied into cluster Y at move destination, and the link information of FAT table inside the data processing apparatus 200b is rewritten. At this time, in cluster X, the link information is rewritten, but the data are not erased. Hence, after the moving process, until the FAT table of semiconductor recording medium 100 is updated, cluster X is recognized to be a free cluster on the FAT table of data processing apparatus 200b, but the state before move of cluster X is maintained on the FAT table of semiconductor recording medium 100. Such cluster X is a provisional free cluster. In this case, cluster X which is a provisional free cluster is storing the previous data, and in the semiconductor recording medium 100, the corresponding relation between the FAT table and data is maintained. However, while writing data into the provisional free cluster or immediately after writing, if power supply to the semiconductor recording medium 100 is interrupted incidentally, the data of provisional free cluster are overwritten, but the FAT table of semiconductor recording medium 100 is not updated, and mismatching occurs in the correlation of FAT table of semiconductor recording medium 100 and the data. Accordingly, in the embodiment, before writing data into the provisional cluster, FAT table 1 and FAT table 2 on the semiconductor recording medium 100 are updated (S1306, S1307). Therefore, if power supply to the semiconductor recording medium 100 is interrupted incidentally, while writing data into the provisional free cluster or immediately after writing, matching between the FAT table of semiconductor recording medium 100 and the data is maintained.

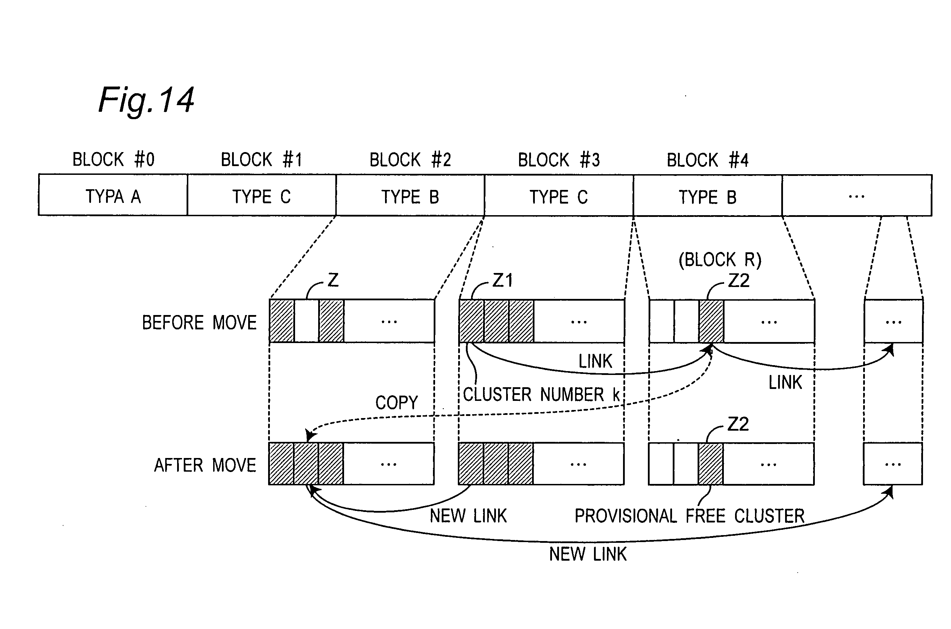

FIG. 14 explains changes of state when free cluster Z is present in block #2 before move and data of "cluster Z2" of block #4 is moved to "free cluster Z" by re-arrangement process. However, only the link information is rewritten on the RAM of file system controller 230 of data processing apparatus 200b, and it is supposed that FAT information of semiconductor recording medium 100 is not updated. At this time, the semiconductor recording medium 100 recognizes that data is still recorded in cluster Z2 of move origin in block #4. Cluster Z2 after move becomes "provisional free cluster". When data re-arrangement explained in FIG. 12 is advanced, other data may possibly be overwritten on provisional free cluster. If power interruption or the like occurs while overwriting, data cannot be restored, and the process at step S1307 is executed, and FAT table 1 and FAT table 2 are written back in semiconductor recording medium 100, and the semiconductor recording medium 100 recognizes that cluster Z2 is a free area.

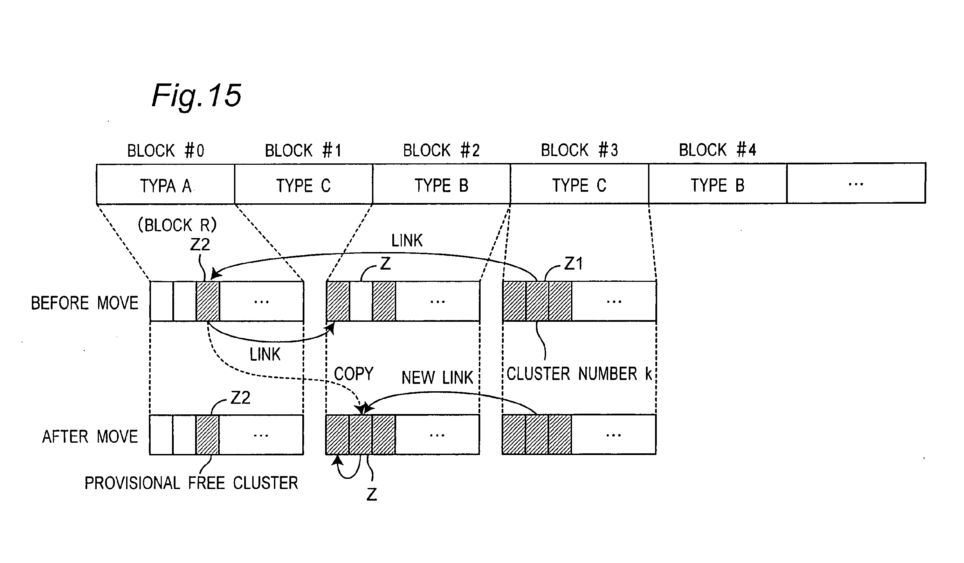

FIG. 15 explains changes of state when free cluster Z is present in block #2 before move and data of cluster Z2 of block #0 are moved to free cluster Z by the re-arrangement process. After the move, cluster Z2 is a provisional free cluster.

In the embodiment, by re-arranging data so that a specific number or more free clusters may be present in each block of semiconductor recording medium 100, it is possible to decrease the number of blocks for extremely lowering the writing processing speed.

The re-arrangement method of the embodiment is realized only by exchange of link information stored in FAT table 1 and FAT table 2 and copy of data into data area 132. High speed processing is possible because search or rewriting of directory entry 301 is not needed.

The following modified examples can be conceived.
(1) In the embodiment, the block judging section 260 has information about definition of block type preliminarily, but when information about definition of block type is stored in the semiconductor recording medium 100, the data processing apparatus 200b may determine the definition of block type by referring to such information. Or it may be determined by the information specified by the user.
   The definition of block type of the embodiment is mere example, and it may be determined not by the number of free clusters, but by the proportion or assigned size of the number of free clusters.
(2) In the embodiment, the FAT file system is explained, but it is not limited. The concept of the invention can be applied where file data is managed in a smaller unit than the block unit.
   The block unit and cluster unit are mere examples, and other sizes are also applicable.
(3) In the embodiment, in the explanation of data re-arrangement process, error processing is omitted, but error processing may also be added. For example, in the event of breakdown of FAT table 1 or FAT table 2, re-arrangement process may be interrupted as error processing.
(4) In the embodiment, FAT table 1 and FAT table 2 are written (S1306, S1307) immediately before overwriting of data in order to avoid mismatching of information stored in data area 132 of semiconductor recording medium 100 and information stored in management information area 131 due to power interruption in the midst of re-arrangement process. However, if not to generate power interruption is guaranteed beforehand, or if mismatching is no problem, such process can be omitted.
(5) In the embodiment, supposing cluster number k to be 0 at S1301, data search of move origin is started from the first cluster of data area 132, but it is not always required to start from the beginning. For example, the cluster number of previous search is stored, and search may be started from the next one.
(6) Data re-arrangement method of the embodiment is effective when the block to be managed in the recording medium is larger than the cluster which is management unit of file data in the file system, and when the access speed may be lowered due to writing over plural blocks. As far as the recording medium satisfies such condition, the invention is not limited to the semiconductor recording medium.
(7) In the embodiment, writing sequence of FAT table 1 and FAT table 2 is notparticularlymentioned, but in the following modified example, if power is interrupted during writing process into FAT table 1 or FAT table 2, data can be restored.

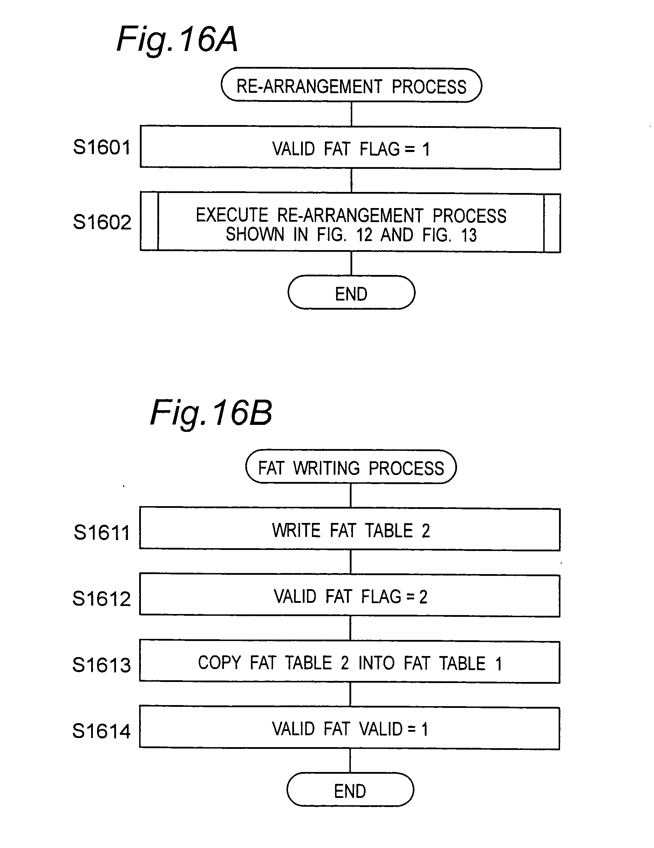

   FIG. 16A and FIG. 16B are flowcharts of modified example of data re-arrangement process. In the modified example, the data processing apparatus 200b is supposed to have the valid FAT flag. The valid FAT flag is a flag showing which one of FAT table 1 and FAT table 2 is valid. Referring to this flag, valid FAT table is determined, and correct link information is obtained by referring to information of the valid FAT table.
   First of all, the valid FAT flag is set to "1" (S1601). Then, the re-arrangement process shown in FIG. 12 and FIG. 13 is executed (S1602). However, writing process of FAT table at steps S1209 and S1307 is executed as shown in FIG. 16B.
   Process in FIG. 16B is explained.
   The FAT table 2 on the data processing apparatus 200b is written back into the semiconductor recording medium 100 (S1611). Next, the valid FAT flag is set to "2" (S1612), and the FAT table 2 is copied into FAT table 1 on the semiconductor recording medium 100 (S1613). After completion of copying, the valid FAT flag is returned to "1" (S1614).
   When this modified example is applied, if power is interrupted during FAT writing process and writing error occurs, the data processing apparatus 200b refers to the valid FAT flag, and can copy the presently valid FAT table into the other. That is, if the valid FAT flag is "1", FAT table 1 is copied into FAT table 2, and if valid FAT flag is "2", FAT table 2 is copied into FAT table 1.
   By this procedure, even if error occurs while writing FAT table, the data can be restored to matched state. The valid FAT flag can be stored in the semiconductor recording medium 100.
(8) The data re-arrangement method of the embodiment can be combined with the data recording method in embodiment 1. By combining the technical concepts of the both embodiments, drop of speed due to fragmentation in data recording can be reduced more effectively.

As this invention may be embodied in several forms without departing from the spirit of the essential characteristics thereof, the present embodiments are therefore illustrative and not restrictive. The scope of the invention is defined by the appended claims rather than by the description preceding them, and all changes that fall within metes and bounds of the claims, or equivalence of such metes and bounds thereof are therefore intended to be embraced by the claims. This application is based upon and claims the benefit of priority from the prior Japanese Patent Application No. 2003-404158 (filed December 3, 2003), the entire contents of which are incorporated herein by reference.

### Industrial Applicability

The invention is capable of avoiding extreme lowering of minimum speed of writing process into information recording medium by writing only into blocks having more than a specific number of free clusters, and is hence applicable to data processing apparatus of information recording medium demanding high speed writing process such as recording of movie contents.

## Claims

1. A recording method of recording data to an information recording medium, the information recording medium having a recording area for storing data and stored data which is managed by a file system, wherein
the recording area of the information recording medium is managed in block units, and each block includes a specified number of clusters as units for storing data for the file system, and
the data recording method comprises, when necessary to record data in a new free area,
searching for a block which has a specified threshold number or more of unused clusters, and
writing the data in the searched block prior to the other block.

2. The recording method according to claim 1, wherein when necessary to record data to a new free area, the data are written in unused clusters in a valid block which has been searched.

3. The recording method according to claim 2, further comprising
counting the unused clusters contained in each block in the recording area,
determining the valid block on the basis of the counting result,
generating and holding a valid free area list which is list information related to the valid block, and
searching for the valid block by referring to the valid free area list at data recording process.

4. The recording method according to claim 1, wherein information about the threshold is stored in the information recording medium.

5. The recording method according to claim 1, wherein the threshold is a value of 1/2 or more of the number of clusters included in one block.

6. A data processing apparatus for writing or reading data to or from an information recording medium, wherein
a recording area of the information recording medium is managed in block units, and each block includes a specified number of clusters, the cluster is unit for storing data for a file system,
the data processing apparatus comprises:
an I/O processing section that processes input and output of information for the information recording medium;
a file system controller that manages data stored in the information recording medium, as a file;
a data processor that controls writing and reading of data to and from the information recording medium; and
a valid free area manager that holds information for a block containing a specified threshold number or more of unused clusters in an area of the information recording medium, and
when necessary to record data to a new free area, the data processor, as a control, searches for a block containing a specified threshold number or more of unused clusters with reference to the information held in the valid free area manager, and writes data to the searched block prior to the other block.

7. The data processing apparatus of claim 6, wherein the valid free area manager holds a valid free area list which is list information related to a valid block which is a block including a specific number or more of unused clusters.

8. The data processing apparatus of claim 6, wherein information about the threshold is stored in the information recording medium.

9. The data processing apparatus of claim 6, wherein the threshold is a value of 1/2 or more of the number of clusters included in one block.
